(19) Europäisches Patentamt
European Patent Office
Office européen des brevets

(11) **EP 4 329 188 A1**

(12) **EUROPEAN PATENT APPLICATION**

(43) Date of publication:
**28.02.2024   Bulletin 2024/09**

(21) Application number: **22306258.9**

(22) Date of filing: **25.08.2022**

(51) International Patent Classification (IPC):
***H02P 21/28*** *(2016.01)*

(52) Cooperative Patent Classification (CPC):
**H02P 21/28**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Mitsubishi Electric R & D Centre Europe B.V.**
  **1119 NS Schiphol Rijk (NL)**
• **MITSUBISHI ELECTRIC CORPORATION**
  **Chiyoda-ku**
  **Tokyo 100-8310 (JP)**
  Designated Contracting States:
  **AL AT BE BG CH CY CZ DE DK EE ES FI GB GR
  HR HU IE IS IT LI LT LU LV MC MK MT NL NO PL
  PT RO RS SE SI SK SM TR**

(72) Inventors:
• **BUENO MARIANI, Guilherme**
  **35700 Rennes (FR)**
• **VOYER, Nicolas**
  **35700 Rennes (FR)**
• **VARATHARAJAN, Anantaram**
  **10129 Torino (IT)**
• **PELLEGRINO, Gianmario**
  **10129 Torino (IT)**
• **PESCETTO, Paolo**
  **10129 Torino (IT)**

(74) Representative: **Cabinet Le Guen Maillet**
  **3, impasse de la Vigie**
  **CS 71840**
  **35418 Saint-Malo Cedex (FR)**

(54) **A METHOD AND A DEVICE FOR CONTROLLING A THREE-PHASE MOTOR**

(57) The present invention concerns a device and a method for controlling a motor using a DFVC module and a CCAL module. The invention:
- determines a torque reference,
- determines, by the CCAL module, a flux reference and a current reference from the torque reference and a predetermined angle,
- provides the flux reference and the current reference to the DFVC module in order to obtain a reference voltage to be provided to the motor,
- injects a high frequency signal on the reference voltage,
- determines, from motor current vector, an estimate of the direction of a flux of the motor,
- determines, from the estimate of the direction of the flux, an estimate of a flux and an estimate of the current that flows perpendicular to the estimated direction of the flux,
- provides the estimate of the flux and the estimate of the current that flows perpendicular to the estimated direction of the flux to the DFVC module.

Fig. 1

**Description**

TECHNICAL FIELD

The present invention relates generally to a method and a device for controlling a three-phase motor.

RELATED ART

Electrical machines are widely used on the industry either for factory automation or transportation. Many control techniques for machines as Permanent Magnet Synchronous Machines (PMSM), Synchronous Reluctance Machines (SyncRM), Wounded Rotor Synchronous Machines (WRSM) often use a rotary encoder for obtaining the speed and the position of the machine as feedback.

The demand for low-cost and robust motor drives has increased the development of sensorless control. Without those sensors the machine drives become less expensive and more robust to dusty and harsh environments.

Many techniques for sensorless control are proposed. These techniques are based on the estimation of the position and the speed of the machine but one aspect that is often neglected on the sensorless controller is the strategy for choosing the current references of the FOC (Field-Oriented Control) controller from a given desired torque reference. MTPA (Maximum-Torque-Per-Ampere) operation uses a minimised level of current able to produce a given torque, and thus minimises the level current-induced losses in the motor drive (inverter and motor losses).

In CVC controllers (Current Vector Control), the reference quantities are the coordinates of current vector in the rotor ($dq$) axis framework. MTPA condition is met only for a specific direction of the current vector in that framework. The ideal direction depends on the parameters of the machine, which vary in both $d$ and $q$ axis as function of current coordinates.

To reach MTPA conditions, both inductance levels and rotor position must be estimated. To address this problem, some machine controllers are equipped with self-commissioning routines, to acquire and store lookup tables (LUT) of inductances with regards to current. The drawback of this methodology is related to the discovery time prior to first using the machine being driven, the required memory and precision, as it is difficult to acquire effective inductance tables for full load condition in absence of pre-equipped test loads.

In DFVC (Direct Flux Vector Control), the reference quantities are the norm of flux and one current component. This technique operates in the stator flux framework, which needs no estimation of the rotor position. DFVC operation instead requires the estimation of the norm of the flux and of the current component perpendicular to the flux. Operating DFVC under MTPA condition at a given torque also requires the identification of an optimal flux norm. As example, for high speeds, the optimal flux norm is identified to be reached when the HF current response of the machine to an HF voltage pattern injected in the direction of current vector, gets perpendicular to the current vector.

The main problem for the use of DFVC is that it relies on a flux estimator. In absence of LUT, usual flux estimators are based on the BEMF sensing (back-electromotive field) which is the product of the speed and the flux linkage. However, for low and zero speeds, the flux cannot be properly estimated via BEMF. As a result, sensorless DFVC is prone to stability issues in absence of LUT at low speeds.

SUMMARY OF THE INVENTION

The present invention aims to provide a sensorless control method and device using an effective sensorless DFVC control for low speeds without LUT.

To that end, the present invention concerns a method for controlling a motor using a direct flux vector control module and a constant current angle locus module, characterized in that the method comprises the steps of:

- determining a torque reference,
- determining, by the constant current angle locus module, a flux reference and a current reference from the torque reference and a predetermined angle,
- providing the flux reference and the current reference to the direct flux vector control module in order to obtain a reference voltage to be provided to the motor,
- injecting a high frequency signal on the reference voltage,
- determining from motor current vector an estimate of the direction of a flux of the motor,
- determining from the estimate of the direction of the flux an estimate of the norm of the flux and an estimate of the current that flows perpendicular to the estimated direction of the flux,
- providing the estimate of the norm of the flux and the estimate of the current that flows perpendicular to the estimated direction of the flux to the direct flux vector control module.

The present invention also concerns a device for controlling a motor using a direct flux vector control module and a constant current angle locus module, characterized in that the device comprises:

- means for determining a torque reference,
- means for determining, by the constant current angle locus module, a flux reference and a current reference from the torque reference and a predetermined angle,
- means for providing the flux reference and the current reference to the direct flux vector control module in order to obtain a reference voltage to be provided to the motor,
- means for injecting a high frequency signal on the reference voltage,
- means for determining from motor current vector an estimate of the direction of a flux of the motor,
- means for determining from the estimate of the direction of the flux an estimate of the norm of the flux and an estimate of the current that are perpendicular to the estimated direction of the flux,
- means for providing the estimate of the norm of the flux and the estimate of the current that flows perpendicular to the estimated direction of the flux to the direct flux vector control module.

Thus, the flux reference and the current reference perpendicular to the flux are determined at any conditions, including at low-speed conditions. As the angle between the estimated current and the estimated flux is stabilised, the resulting torque is stable. The stability is conserved at low speed even when the flux estimate is of poor quality.

The proposed sensorless control is effective at low speed and at standstill as well. As the scheme operates well at low speed, a similar control structure can be applied at high speed as well (e.g. above 200rpm) using precise BEMF-based flux estimator, with smooth transition between low-speed and high-speed regions (e.g. at 200 rpm). As DFVC controller requires no estimation of rotor angle, the resulting controller structure is not prone to instabilities resulting from inaccuracy of estimation of rotor position.

According to a particular feature, the flux reference is determined using a first function of nominal parameters of the motor times, the square root of a product of the torque divided by the tangent of the reference angle, and the current reference is determined using a second function of nominal parameters of the motor times, the square root of the product torque reference multiplied by the tangent of the reference angle.

Thus, the flux and current references used in DFVC guarantee the realisation of the DFVC control with fixed angle between flux and current vectors, at any torque conditions.

According to a particular feature, the first function is $f_1 = \sqrt{\dfrac{2\lambda_n}{3pI_n sin(\phi_n)}}$ , and the second function is

$f_2 = \sqrt{\dfrac{2I_n sin(\phi_n)}{3p\lambda_n}}$ , where $\lambda_n$ is the nominal flux of the motor, $I_n$ is the nominal current of the motor, $sin(\phi_n)$ is determined from the nominal power factor $cos(\phi_n)$ of the motor, p is the number of pole pairs of the motor.

Thus, the torque produced by the DFVC controller is a good approximation of the reference torque in nominal conditions. In other torque conditions, the produced torque may deviate from the reference torque level. Yet, the level of produced torque is stable even at low speed, and level of torque reference may get adjusted.

In presence of error in the flux estimate, the DFVC trajectory taken by the DFVC controller does not deviate far away from the optimal Maximum Torque Per Ampere (MTPA) conditions. The CCAL controller is thus stable but also efficient at low speeds.

According to a particular feature, the flux reference $\lambda^*$ and the current reference $i_\tau^*$ are determined according to the following formulas:

$$\lambda^* = \sqrt{\frac{2|T^*|\lambda_n}{3pI_n tan(\gamma_\lambda^*)sin(\phi_n)}} = \sqrt{\frac{2\lambda_n}{3pI_n sin(\phi_n)}}\sqrt{\frac{|T^*|}{tan(\gamma_\lambda^*)}}$$

$$i_\tau^* = \sqrt{\frac{2|T^*|I_n sin(\phi_n)tan(\gamma_\lambda^*)}{3p\lambda_n}} = \sqrt{\frac{2I_n sin(\phi_n)}{3p\lambda_n}}\sqrt{|T^*|tan(\gamma_\lambda^*)}$$

where $\lambda_n$ is the nominal flux of the motor, $I_n$ is the nominal current of the motor, $sin(\phi_n)$ is determined from the nominal power factor $cos(\phi_n)$ of the motor, p is the number of pole pairs of the motor, $T^*$ is the torque reference and $\gamma_\lambda^*$ is the predetermined angle.

According to a particular feature, the predetermined angle is comprised between 30° to 45°.

Thus, the DFVC trajectory does not deviate far away from MTPA trajectory. Furthermore, angles away from this range may cause issues such as instability of DFVC controller (for larger angles) or undesired motor losses (for lower angles).

According to a particular feature, the predetermined angle is determined as $\gamma_\lambda = \pi\frac{\widehat{\gamma_d}}{180} - \text{atan}\left(\frac{\widehat{L_q}}{\widehat{L_d}}\right)$ , where $\widehat{L_d}$ and $\widehat{L_q}$ are nominal inductances estimated from nameplate characteristics of the motor, and $\widehat{\gamma_d} = 55°$ or more.

Thus, the controller trajectory better matches the MTPA conditions. The predetermined angle can be adapted to the nominal saliency of the machine from its nameplate characteristics.

According to a particular feature, the predetermined angle is determined as a function of torque that is stored in a lookup table.

Thus, precise MTPA conditions can be met away from nominal conditions, improving the efficiency of the DFVC controller at low speeds and at standstill. As example, the table may be acquired using an MTPA tracking algorithm available at high speeds.

According to a particular feature, the predetermined angle is determined from current-to-torque-reference ratios observed at varying levels of predetermined angles and varying torque reference levels and an optimal angle is determined as the angle which minimizes the observed current-to-torque-reference ratio for the determined torque reference.

Thus, precise MTPA conditions can be met away from nominal conditions, improving the efficiency of the DFVC controller at low speeds and at standstill. The controller may acquire table at standstill conditions without the need to perform MTPA acquisition through high rotational speeds.

According to a particular feature, the estimated flux level is estimated as the current projected in the axis of estimated flux times a fixed ratio.

Thus, the flux estimate is very easy to be determined, even at low speeds. The linearity assumption is fairly erroneous, but properly reflects the monotony of dependency of flux level with current level. In other words, the estimated flux may be prone to estimation error in norm and/or direction (e.g. due to saturation and/or saliency), but the estimation error is locally stable. The DFVC can effectively control the erroneous flux estimate towards the reference flux reference, even at low speed/standstill operating regions where back-emf due to rotation is hardly detected.

According to a particular feature, the fixed ratio is determined from nameplate characteristics of the motor.

Thus, the estimated flux is estimated without error at nominal operation point of the machine. At this point, the proposed control method operates at MTPA conditions, i.e. minimises the level of current needed to reach the desired torque level. At other torque conditions, the control method does not operate far away from true MTPA conditions, and the resulting increase of copper losses is kept small. The sensorless control method operates in the vicinity of true MTPA conditions at low speeds.

According to a particular feature, the high frequency injection signal is parallel to the estimated flux vector and the angle of flux vector is estimated to drive the high frequency response of the current vector to be parallel to the current.

Thus, the angle of flux vector is estimated in spite of absence of knowledge of precise inductance conditions of the machine. The proposed control method operates in full absence of lookup-table. As HF flux injection is proportional to the flux, it is easy to detect and drive variations of current level in quadrature to the current direction to zero.

According to a particular feature, the high frequency injection is perpendicular to the estimated flux vector and the angle of flux vector is estimated to drive the high frequency response of the current vector to be perpendicular to the current vector.

Thus, the angle of flux vector is estimated in spite of absence of knowledge of precise inductance conditions of the machine. The proposed control method operates in full absence of lookup-table. As HF flux injection is perpendicular to the flux, iron losses resulting from HF injection are minimised.

BRIEF DESCRIPTION OF THE DRAWINGS

The characteristics of the invention will emerge more clearly from a reading of the following description of example embodiments, the said description being produced with reference to the accompanying drawings, among which:

Fig. 1 represents a first example of a direct flux vector controller of a motor using a Constant Current Angle Locus (CCAL) according to the invention;

Fig. 2 represents an example of a block diagram of a high frequency injection module according to the invention;

Fig. 3 represents an example of a block diagram of a flux estimation module according to the present invention;

Fig. 4 represents an example of a block diagram of an estimation module of a flux level of a current perpendicular to an estimated direction of the flux according to the present invention;

Fig. 5 represents an example of a block diagram of a Direct Flux Control Vector module according to the present invention;

Fig. 6 represents an example of a torque estimation module according to the invention;

Fig. 7 represents the motor frameworks used by the present invention;

Fig. 8 represents an example of a framework transformation module that transforms the reference voltage $v^*_{f\tau}$ in an $f\tau$ framework into a reference voltage $v^{**}_{\alpha\beta}$ in an $\alpha\beta$ framework using an estimated direction of flux vector $\hat{\delta}_\alpha$

Fig. 9 represents an example of an algorithm for controlling a motor according to the invention;

Figs. 10 show measurements results taken with different angles in comparison with an ideal MTPA system.

Fig. 11 represents a second example of a direct flux vector controller of a motor using a Constant Current Angle Locus according to the invention.

DESCRIPTION

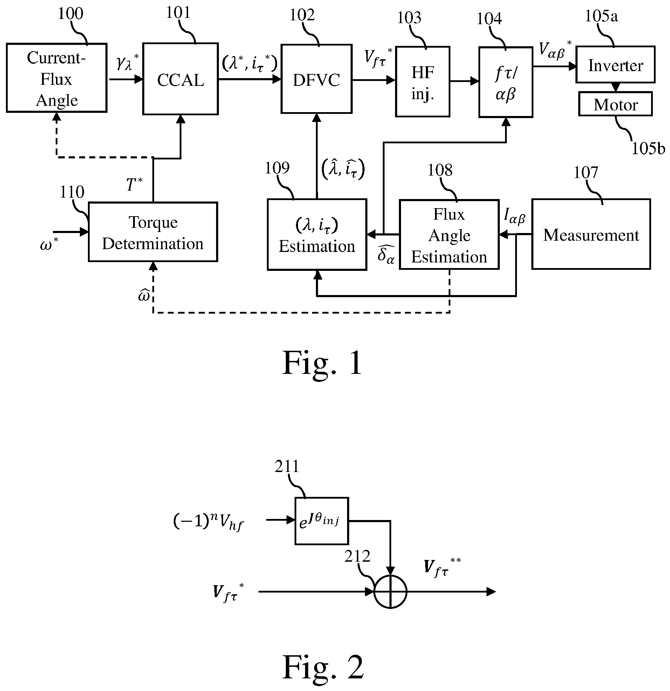

**Fig. 1** represents a first example of a direct flux vector controller of a motor using a Constant Current Angle Locus according to the invention.

The direct flux vector controller of a motor using a Constant Current Angle Locus shown in Fig. 1 comprises a current-flux angle determination module 100, a Constant Current Angle Locus module 101, a Direct Flux Vector Control module 102, an HF injection module 103, a framework transformation module 104, an inverter 105a connected to a motor 105b, a current measurement module 107, a flux angle estimation module 108, an estimation module 109 of a flux level and of a current perpendicular to an estimated direction of the flux and a torque reference determination module 110.

For linear machines, MTPA operation is achieved for a current shoot angle $\widehat{\gamma d}$ in a *dq* framework of 45°, i.e. $I_d = I_q$. For non-linear machines, the ideal MTPA operation is achieved for a higher current angle, with a deviating value that can reach as example 55° at nominal point.

When considering typical synchronous reluctance machine with a typical saliency ratio of 2-4, this gives a corresponding flux shoot angle of 15-25° in the *d* axis.

The current flux angle determination module 100 determines a predetermined angle $\gamma_\lambda$ that is the angle of the current vector in $f\tau$ frame, that equals the difference between the current shoot angle and the flux shoot angle. Predetermined angle $\gamma_\lambda$ is set in the 30-45° range.

In a first variant of invention, the predetermined angle $\gamma_\lambda$ is determined as $\gamma_\lambda = \pi\dfrac{\widehat{\gamma d}}{180} - \text{atan}\left(\dfrac{\widehat{L_q}}{\widehat{L_d}}\right)$ , where $\widehat{L_d}$ and $\widehat{L_q}$ are nominal inductances estimated from nameplate characteristics of the motor, and $\widehat{\gamma d} = 55°$ = 55° for example.

In a preferred implementation of invention, the predetermined angle is preferably under-dimensioned for example by 5°, (e.g. using $\widehat{\gamma d} = 50°$ ) to preserve the stability margin of sensorless control, as it operates away from low incremental saliency regions.

In another variant of invention, the predetermined angle $\gamma_\lambda$ is determined as a function of torque that is stored in a lookup table. For example, MTPA trajectory may be acquired at high speeds, together with inductance data. From such data, one can build the function that relates torque with an optimal predetermined angle $\gamma_\lambda$. At low speeds, the predetermined angle $\gamma_\lambda$ is set from the determined torque level.

In another variant of invention, the current-to-torque-reference ratio is observed and stored for varying levels of angle $\gamma_\lambda$ and varying torque levels. Optimal angle is determined as the angle which minimizes the current-to-torque-reference ratio for the torque reference determined by the torque reference determination module 110.

The Constant Current Angle Locus module 101 determines a flux reference level $\lambda^*$ and a current reference level $i_\tau^*$ from a torque reference $T^*$ and from the angle $\gamma_\lambda^*$.

The Constant Current Angle Locus module 101 stores the nominal parameters of the motor, computes the flux reference level $\lambda^*$ as a first function of the nominal parameters of the motor times, the square root of the product of torque reference divided by the tangent of the angle $\gamma_\lambda^*$.

The Constant Current Angle Locus module 101 computes the current reference level $i_\tau^*$ as a second function of the nominal parameters of the motor 105 times the square root of the product torque reference multiplied by the tangent of the angle $\gamma_\lambda{}^*$.

In a preferred implementation of invention, the first function is $f_1 = \sqrt{\dfrac{2\lambda_n}{3pI_n sin(\phi_n)}}$ , and the second function is $f_2 = \sqrt{\dfrac{2I_n sin(\phi_n)}{3p\lambda_n}}$ , where $\lambda_n$ is the nominal flux of the motor 105b, In is the nominal current of the motor 105b, $sin(\phi_n)$ is determined from the nominal power factor $cos(\phi_n)$ of the motor 105b, p is the number of pole pairs of the motor 105b.

The torque is generally expressed as

$$T = \frac{3p}{2}\|\lambda\|i_\tau$$

where $\|\lambda\|$ is norm of flux vector and $i_\tau$ is the projection of current vector in perpendicular to the flux vector.

At nominal operation point, $\|\lambda\| = \lambda_n$ and $i_\tau = I_n sin(\phi_n)$, thus $T_n = \dfrac{3p}{2}\lambda_n I_n sin(\phi_n)$ . $I_n$, $\lambda_n$, $\phi_n$, $T_n$ and p are nominal conditions of the motor 105b, which can be accessed through the datasheet or the motor.

Using a linear flux estimation model, we derive $\|\lambda\| = \dfrac{\lambda_n}{I_n sin(\phi_n)}i_f$ .

Considering the current vector is forming the desired angle $\gamma_\lambda{}^*$ with the flux vector, we get $i_\tau = \|I\|sin(_{\gamma_\lambda}{}^*)$, $i_f = \|I\|cos(\gamma_\lambda{}^*)$, from which $T = \dfrac{3p}{2}\|I\|^2 \dfrac{\lambda_n}{I_n sin(\phi_n)}sin(\gamma_\lambda{}^*)cos(\gamma_\lambda{}^*)$ . The expression of current amplitude then comes as

$$\|I\| = \sqrt{\frac{4|T|I_n sin(\phi_n)}{3p\lambda_n sin(2\gamma_\lambda{}^*)}}.$$

According to the invention, the formulation of reference torque and current levels is thus given by:

$$\lambda^* = \sqrt{\frac{2|T^*|\lambda_n}{3pI_n tan(\gamma_\lambda{}^*)sin(\phi_n)}} = \sqrt{\frac{2\lambda_n}{3pI_n sin(\phi_n)}}\sqrt{\frac{|T^*|}{tan(\gamma_\lambda{}^*)}}$$

$$i_\tau{}^* = \sqrt{\frac{2|T^*|I_n sin(\phi_n)tan(\gamma_\lambda{}^*)}{3p\lambda_n}} = \sqrt{\frac{2I_n sin(\phi_n)}{3p\lambda_n}}\sqrt{|T^*|tan(\gamma_\lambda{}^*)}$$

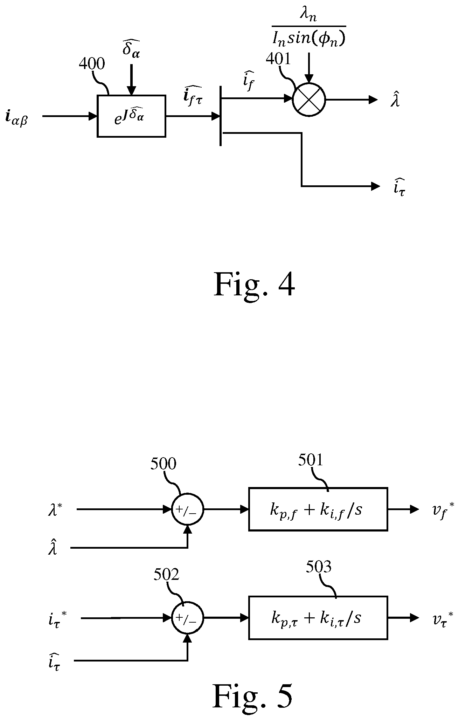

The Direct Flux Control Vector module 102 is disclosed in reference to Fig. 5.

Fig. 5 represents an example of a block diagram of a Direct Flux Control Vector module according to the present invention.

The Direct Flux Control Vector module 102 comprises two subtracting modules 500 and 502 and the proportional integral filters 501 and 503.

The subtracting module 500 subtracts an estimated $\hat{\lambda}$ norm of the flux vector from the flux reference level $\lambda^*$.

The output of the subtracting module 500 is provided to the Proportional Integral filter 501 which provides a voltage reference $V_f{}^*$ in the f axis.

As a result of PI control, the voltage vector $V_f{}^*$ is driven so that estimated flux norm equals the reference flux norm.

The subtracting module 502 subtracts an estimated current $\hat{i}$ from the current reference level $i_\tau^*$.

The output of the subtracting module 502 is provided to the Proportional Integral filter 503 which provides a voltage reference $V_\tau^*$ in the $\tau$ axis.

As a result of PI control, the voltage vector $V_\tau^*$ is driven so that estimated current equals the reference current level.

The coefficients of PI filter are set according to a predetermined controller bandwidth $\omega_{DFVC}$

$$k_{p,f} = 2\omega_f$$

$$k_{i,f} = \left(\omega_f\right)^2$$

$$k_{p,\tau} = 2L_\tau\omega_\tau$$

$$k_{i,\tau} = (\omega_\tau)^2 \cdot L_\tau$$

As example, $\omega_f = 2\pi f_f$ *rad/s*, $\omega_\tau = 2\pi f_\tau$ *rad/s* where $f_f$ and $f_\tau$ belongs to [50..500]Hz. $L_\tau$ is representative of the inductance of the machine in the $\tau$ axis, and may be estimated from nameplate characteristics of the machine. The choice of DFVC control frequency $f_{DFVC}$ relates to the expected dynamics of the control, i.e. the capacity to drive the estimated flux and current towards the reference flux and current within a given time window. In a variant, the DFVC module may also add feedforward terms (determined from current levels and speed) and/or decoupling terms.

The high frequency injection module 103 superposes to the voltage reference $V_{f\tau}^*$ a high frequency signal $(-1)^n V_{hf}$.

The high frequency injection module 103 is disclosed in Fig. 2.

**Fig. 2** represents an example of a block diagram of a high frequency injection module according to the invention.

The high frequency injection module 103 is composed of a transformation module 211 and a summation module 212.

The transformation module 211 performs an $e^{J\theta_{inj}}$ transform where $J$ is the matrix $\begin{bmatrix} 0 & -1 \\ +1 & 0 \end{bmatrix}$, and $\theta_{inj}$ represents the angle of HF injection in the stator flux reference frame. As example $\theta_{inj} = 0$ or $\Pi/2$.

In other words, the high frequency injection signal is then parallel to the estimated flux vector and the direction of flux angle is estimated to drive the high frequency response of the current vector to be parallel to the current or the high frequency injection is perpendicular to the estimated flux vector and the direction of flux angle is estimated to drive the high frequency response of the current vector to be perpendicular to the current vector.

The output of the transformation module 211 is added to the voltage reference $V_{f\tau}^*$ determined by the DFVC module 102. The $V_{f\tau}^{**}$ result is then converted into $\alpha\beta$ framework by the framework transformation module 104.

For example, the high frequency signal is sinusoidal.

For example, the high frequency signal $(-1)^n V_{hf}$ has a fixed amplitude in the range between 5V and 100V, and changes polarity at the frequency of activation of DFVC controller. As examples the frequency of activation of DFVC controller equals the switching frequency of inverter 105a, or twice the switching frequency of inverter 105a. The switching frequency belongs to [1.. 50] kHz.

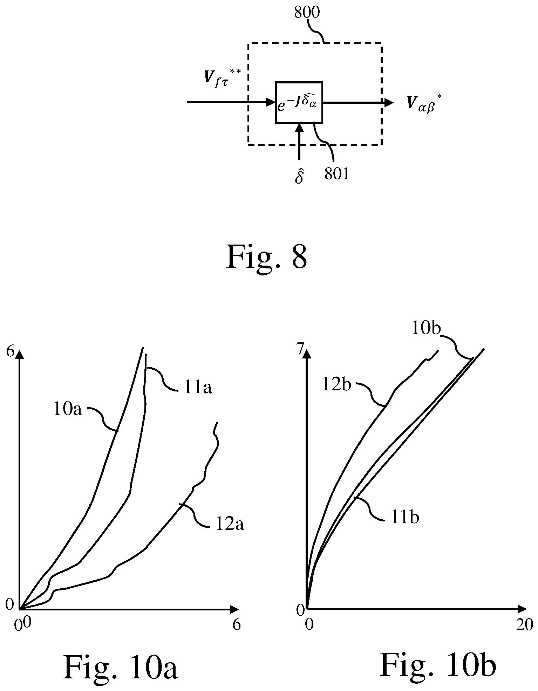

An example of the framework transformation module 104 is given in Fig. 8.

The framework transformation module 104 performs an $e^{J\theta_{inj}}$ transform where $J$ is the matrix $\begin{bmatrix} 0 & -1 \\ +1 & 0 \end{bmatrix}$ using the estimated flux direction $\hat{\delta}$, and $V_{\alpha\beta}^*$ is then used to drive the motor 105b through the voltage source inverter 105a.

The measurements module 107 measures the motor current vector $i_{abc}$ in the three-phases *abc* and transforms the motor current $i_{abc}$ measured in the three-phases *abc* in a measured motor current vector $i_{\alpha\beta}$ in the $\alpha\beta$ framework.

The motor current vector $i_{\alpha\beta}$ is provided to the flux angle estimation module 108 and to the estimation module 109 of a flux level and of a current perpendicular to an estimated direction of the flux.

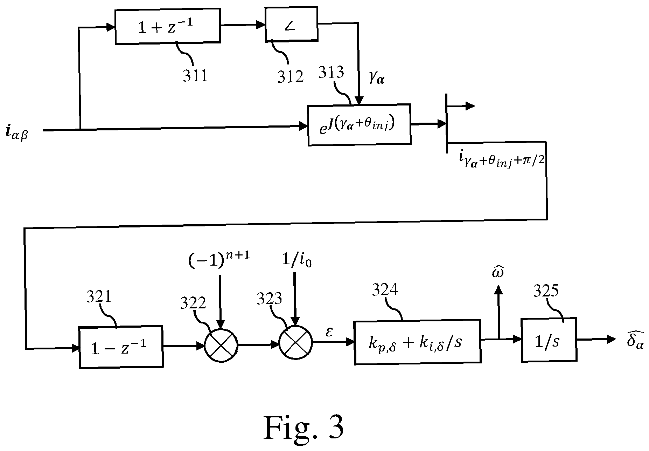

An example of the flux angle estimation module 108 is disclosed in reference to Fig. 3.

**Fig. 3** represents an example of a block diagram of a flux estimation module according to the present invention.

The flux angle estimation module 108 is composed of two filters 311 and 321, an angle detection module 312, a framework transformation module 313, two multipliers 322 and 323, a proportional integral filter 324 and an integrator 325.

The filter 311 sums the sample of the current vector $i_{\alpha\beta}$ to the previous sample of the current vector $i_{\alpha\beta}$.

The angle detection module 312 determines the angle $\gamma_\alpha$ of the current vector projected in the $\alpha$ axis and provides the angle of the current vector in the $\alpha$ axis to the framework transformation module 313.

The framework transformation module 313 performs an $e^{J((\gamma_\alpha + \theta_{inj}))}$ rotation transform where $J$ is the matrix

$$\begin{bmatrix} 0 & -1 \\ +1 & 0 \end{bmatrix}$$ of the current vector $i_{\alpha\beta}$.

Only the transformed current vector projected orthogonally to the rotation angle (in the $\gamma_\alpha + \theta_{inj} + \pi/2$ axis) is provided to the filter 321.

The filter 321 sums the sample of the current vector $i_{\gamma_\alpha} + \theta_{inj} + \pi/2$ to the previous sample of the current vector $i_{\gamma_\alpha} + \theta_{inj} + \pi/22$.

The output of the filter 321 is multiplied by the multiplier 322 by $(-1)^{n-1}$, i.e. using the polarity of HF voltage injected at previous activation of high frequency injection module 103. The function of the multiplier 322 is similar to a simplified heterodyne demodulation being applied to square waves. The invention equally applies to other injection types where multiplier 322 can be replaced with heterodyne demodulator.

The output of the multiplier 322 is multiplied by the multiplier 323 by $1/i_0$.

HF response current is therefore first heterodyne demodulated and then a proportional integral filter 324 drives the output of heterodyne demodulation to zero. The output of the proportional integral filter 324 estimates the speed of the motor $\hat{\omega}$, which by integration by the integrator 325 provides the estimated direction of the flux $\hat{\delta}$.

The coefficients of integral filter 324 are set according to a proportional integral filter bandwidth $\omega_\delta$

$$k_{p,\delta} = 2\omega_\delta$$

$$k_{i,\delta} = (\omega_\delta)^2$$

As example, $\omega_\delta$ = 15 rad/s. The proportional integral filter bandwidth $\omega_\delta$ relates to the expected dynamic to track any changes in speed.

The gain of resulting of the integral filter is given by

$$i_0 \approx V_{hf} T_s \frac{l_d - l_q}{l_d l_q}$$

$V_{hf}$ is the level of injection, $T_s$ is the time period between successive activations of controller, $l_d$ and $l_q$ are incremental inductances of the motor 105b in d and q axes. As example, the frequency of activation of proportional integral filter is 1 kHz, and $T_s$ = 1ms.

In a preferred implementation, approximated values of $l_d$ and $l_q$ are derived from the nameplate characteristics of the motor 105b. ($T_n$ : nominal torque, $i_n$ : nominal current, $P_n$ : nominal power, $\omega_n$ : nominal electrical speed, $PF = cos(\phi_n)$ : nominal power factor, $p$ : number of pole pairs).

Considering a current shoot angle $\psi \sim 55°$ at nominal conditions, nominal torque is $T_n = p(L_d - L_q)i_q i_q = p(L_d - L_q)i_n^2 sin(2\widehat{\gamma_d})/2$. From which we get

$$L_d - L_q = \frac{2T_n}{pi_n^2 sin(2\widehat{\gamma_d})}$$

From power factor at nominal operation point and assuming unitary efficiency of the drive, the reactive power is expressed as $Q_n = P_n tan(\phi_n) = \dfrac{\omega_n i_n^2 \left(L_d cos^2(\widehat{\gamma_d}) + L_q sin^2(\widehat{\gamma_d})\right)}{}$. We therefore reach inductance levels at nominal operation point:

$$\widehat{L_d} = \frac{T_n}{pi_n{}^2}\big(tan(\phi_n) + tan(\widehat{\gamma_d})\big)$$

$$\widehat{L_q} = \frac{T_n}{pi_n{}^2}\left(tan(\phi_n) - \frac{1}{tan(\widehat{\gamma_d})}\right)$$

Finally, assuming that the machine is magnetically linear we get

$$l_d = \widehat{L_d}, \qquad l_q = \widehat{L_q}.$$

The output of the flux angle estimation module 108 is provided to the estimation module 109 of a flux level and of a current perpendicular to an estimated direction of the flux and to the framework transformation module 104.

An example of the estimation module 109 of a flux level and of a current perpendicular to an estimated direction of the flux is disclosed in reference to Fig. 4.

The **Fig. 4** represents an example of a block diagram of an estimation module of a flux level and a current perpendicular to an estimated direction of the flux according to the present invention.

The estimation module 109 of a flux level and of a current perpendicular to an estimated direction of the flux comprises a framework transformation module 400, and a multiplier 401.

The current vector $i_{\alpha\beta}$ is converted into the flux framework using the estimated direction of the flux $\widehat{\delta\alpha}$ , from which $\widehat{i_{f\tau}}$ is determined. The component $\widehat{i_f}$ is multiplied by $\frac{\lambda_n}{I_n sin(\phi_n)}$ . The norm of flux $\hat{\lambda}$ is determined from the component of current $\widehat{i_f}$ in line with the flux.

According to the invention, the norm of flux vector is assumed to be linear with the current in the flux axis, and is determined from nominal operation conditions $I_n$, $\lambda_n$, $\phi_n$, which can be accessed through nameplate characteristics of the machine:

$$\hat{\lambda} = \frac{\lambda_n}{I_n sin(\phi_n)} \widehat{i_f}.$$

The estimated flux level is then estimated from the current projected in the axis of estimated flux using a fixed ratio that is determined from nameplate characteristics of the motor.

The determined estimated $\widehat{i_f}$ and $\hat{\lambda}$ are provided to the DFVC module 102.

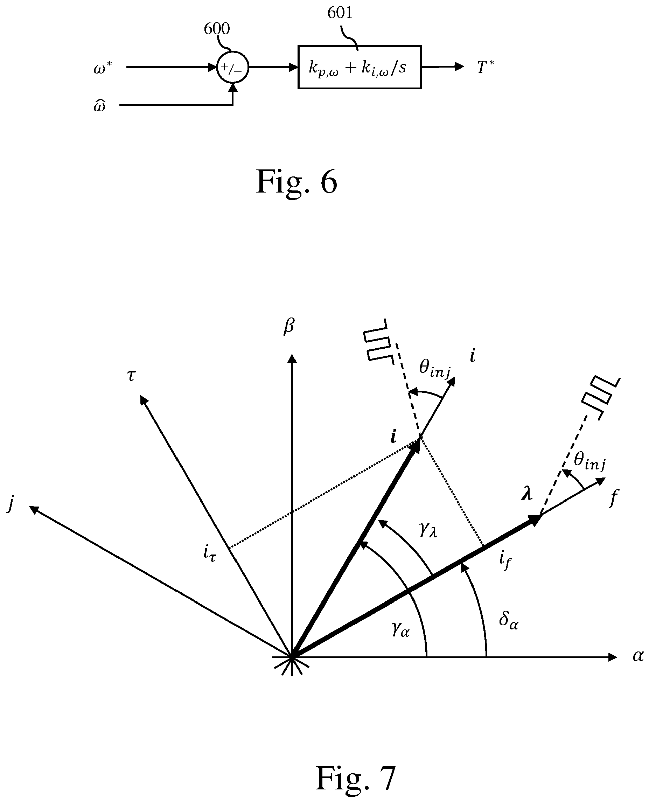

An example of the torque reference estimation module 110 is disclosed in reference to Fig. 6.

The **Fig. 6** represents an example of a torque reference estimation module according to the invention.

The torque reference estimation module comprises a subtracting module 600 and a proportional integral filter 601.

The subtracting module 600 subtracts to the speed reference $\omega^*$ the speed estimate $\hat{\omega}$. The output of the subtracting module is provided to the proportional integral filter 601.

As a result of proportional integral filter 601, the torque reference $T^*$ is driven so that estimated speed $\hat{\omega}$ equals the reference speed level $\omega^*$.

The coefficients of proportional integral filter 601 are set according to a proportional integral filter 601 bandwidth $\omega_{speed}$

$$k_{p,\omega} = 2J\omega_{speed}$$

$$k_{i,\omega} = J\left(\omega_{speed}\right)^2$$

where $J$ is the mechanical inertia of the system. As example, $\omega_{speed} = 2\pi f_{speed}$ $rad/s$, where $f_{speed}$ belongs to [1..20]Hz. The choice of speed control frequency $f_{speed}$ relates to the expected dynamics of the proportional integral filter, i.e. the capacity to drive the estimated speed towards the reference speed within a given time window.

The **Fig. 7** represents the motor frameworks used by the present invention. The stator ($\alpha\beta$) framework is fixed. The current stator (ij) framework is a rotated framework with angle ($\gamma_\alpha$) with respect to ($\alpha\beta$), angle being defined by the current vector **i**, that is aligned with $i$ axis. The flux stator ($f\tau$) framework is a rotated framework with angle ($\delta_\alpha$) with respect to ($\alpha\beta$), angle being defined by the flux vector $\lambda$, that is aligned with $f$ axis.

According to the invention, the CCAL module determines the reference amplitude of flux $\|\lambda\|^*$ and the reference current level $i_\tau^*$ from a torque reference according to formulas that force the angle between **i** and $\lambda$ vectors to be equal to a reference $\gamma_\lambda^*$

According to the invention, the HF injection module 103 injects HF flux in a direction $\theta_{inj}$ with respect to axis of estimated stator flux framework. The flux angle estimation module determines an estimation $\hat{\delta}$ of angle of the stator flux framework which drives the HF response of the current vector **i** to form the same angle $\theta_{inj}$ with respect to $i$ axis of estimated stator current framework.

The formulas relate the estimated level of flux to the level of current $i_f$ observed in $f$ axis using a proportional rule, that is identified from nameplate characteristics of the machine.

The **Figs. 10** show measurements results on a commercial synchronous reluctance motor taken with different angles in comparison with an ideal MTPA system.

The horizontal axis of Fig. 10a represents the current in the d axis expressed in Ampere.

The vertical axis of Fig. 10a represents the current in q axis expressed in Ampere. The horizontal axis of Fig. 10b represents the torque expressed in Nm.

The vertical axis of Fig. 10q represents the absolute value of the current in $dq$ framework expressed in Ampere.

Ideal MTPA trajectory is shown in Curves noted 10a and 10b. According to invention, actual trajectories for two different fixed angles $\gamma_\lambda$ are shown in curves 11a, 11b, 12a and 12b.

When the angle $\gamma_\lambda$ is poorly chosen, for example 15°, the trajectory of the current strongly deviates from ideal one, causing a higher level of current for a given torque, and thus losses as shown in curves 12a and 12b.

When the angle $\gamma_\lambda$ is chosen adequately according to invention, for example 30°, the trajectory of current also deviates from ideal one as shown in curves 11a and 11b, but leaves the level of current similar to the one of the MTPA in the curves 10a and 10b.

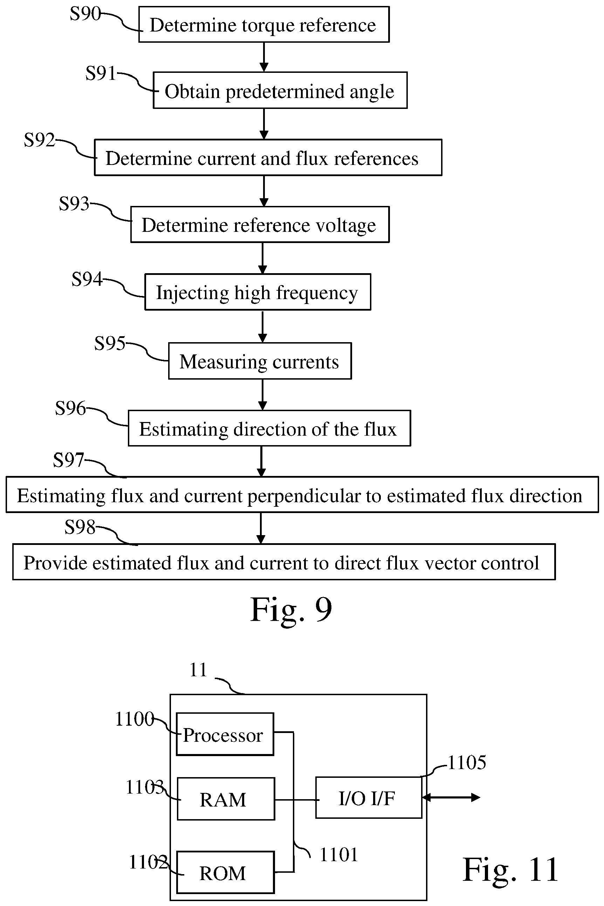

**Fig. 9** represents an example of an algorithm for controlling a motor according to the invention.

The present algorithm is disclosed in an example wherein it is executed by the processor 1100 of the direct flux vector controller of a motor.

At step S90, the processor 1100 determines a torque reference $T^*$ as disclosed in Fig. 1 or Fig.6.

At step S91, the processor 1100 obtains a predetermined angle $\gamma_\lambda^*$.

The predetermined angle $\gamma_\lambda$ is the angle of the current vector in $f\tau$ frame, that equals the difference between the current shoot angle and the flux shoot angle.

In a first variant of invention, predetermined angle $\gamma_\lambda$ is set in the 30-45° range. The predetermined angle $\gamma_\lambda$ is determined as $\gamma_\lambda = \pi \dfrac{\gamma_d}{180} - \operatorname{atan}\left(\dfrac{\widehat{L_q}}{\widehat{L_d}}\right)$, where $\widehat{L_d}$ and $\widehat{L_q}$ are nominal inductances estimated from nameplate characteristics of the motor, and $\gamma_d = 55°$ for example.

In a preferred implementation of invention, the predetermined angle is preferably under-dimensioned for example by 5°, (e.g. using $\gamma_d = 50°$) to preserve the stability margin of sensorless control, as it operates away from low incremental saliency regions.

In another variant of invention, the predetermined angle $\gamma_\lambda$ is determined as a function of torque that is stored in a lookup table. For example, MTPA trajectory may be acquired at high speeds, together with inductance data. From such data, one can build the function that relates torque with an optimal predetermined angle $\gamma_\lambda$. At low speeds, the predetermined angle $\gamma_\lambda$ is set from the determined torque level.

In another variant of invention, the current-to-torque-reference ratio is observed and stored for varying levels of angle $\gamma_\lambda$ and varying torque reference levels. Optimal angle is determined as the angle which minimizes the measured current-to-torque-reference ratio for the torque reference determined at step S90.

At step S92, the processor 1100 determines a flux reference and a current reference from the torque reference and the predetermined angle.

The flux reference is determined using a first function of nominal parameters of the motor times, the square root of a product of the torque divided by the tangent of the reference angle and the current reference is determined using a second function of nominal parameters of the motor times, the square root of the product torque reference multiplied by the tangent of the reference angle.

The first function is $f_1 = \sqrt{\dfrac{2\lambda_n}{3pI_n sin(\phi_n)}}$ , and the second function is $f_2 = \sqrt{\dfrac{2I_n sin(\phi_n)}{3p\lambda_n}}$ , where $\lambda_n$ is the nominal flux of the motor, $I_n$ is the nominal current of the motor, $sin(\phi_n)$ is determined from the nominal power factor $cos(\phi_n)$ of the motor, p is the number of pole pairs of the motor.

The flux reference $\lambda^*$ and the current reference $i_\tau^*$ are determined according to the following formulas:

$$\lambda^* = \sqrt{\frac{2|T^*|\lambda_n}{3pI_n tan(\gamma_\lambda^*)sin(\phi_n)}} = \sqrt{\frac{2\lambda_n}{3pI_n sin(\phi_n)}}\sqrt{\frac{|T^*|}{tan(\gamma_\lambda^*)}}$$

$$i_\tau^* = \sqrt{\frac{2|T^*|I_n sin(\phi_n)tan(\gamma_\lambda^*)}{3p\lambda_n}} = \sqrt{\frac{2I_n sin(\phi_n)}{3p\lambda_n}}\sqrt{|T^*|tan(\gamma_\lambda^*)}$$

where $\lambda_n$ is the nominal flux of the motor, $I_n$ is the nominal current of the motor, $sin(\phi_n)$ is determined from the nominal power factor $cos(\phi_n)$ of the motor, p is the number of pole pairs of the motor, $T^*$ is the torque reference and $\gamma_\lambda^*$ is the predetermined angle.

At step S93, the processor 1100 determines a reference voltage to be provided to the motor in a similar way as the one performed by the DFVC 102 of Fig. 1.

At step S94, the processor 1100 injects a high frequency signal on the reference voltage in a similar way as the one injected by the high frequency signal injection 103 of Fig 1.

At step S95, the processor 1100 obtains motor current vector measurements in a similar way as the one measured by the current measurement module 107 of Fig 1.

At step S96, the processor 1100 determines, from motor current vector, an estimate of the direction of a flux of the motor in a similar way as the one performed by the flux angle estimation module108 of Fig. 1.

At step S97, the processor 1100 determines, from the estimate of the direction of the flux, an estimate of a flux and an estimate of the current that are perpendicular to the estimated direction of the flux, in a similar way as the ones determined by estimation module 109 of Fig. 1.

At step S98, the processor 1100 provides the estimate of the flux and the estimate of the current that are perpendicular to the estimated direction of the flux to the direct flux vector control step S92.

**Fig. 11** represents a second example of a direct flux vector controller of a motor using a Constant Current Angle Locus according to the invention.

The direct flux vector controller 11 of a motor using a Constant Current Angle Locus has, for example, an architecture based on components connected by a bus 1101 and a processor 1100 controlled by a program as disclosed in Fig. 9.

The bus 1101 links the processor 1100 to a read only memory ROM 1102, a random-access memory RAM 1103, an input output I/O IF interface 1105.

The input output I/O IF interface 1105 enables the device direct flux vector controller 11 to sense signals representative of current flowing through the motor 105b.

The memory 1103 contains registers intended to receive variables and the instructions of the program related to the algorithm as disclosed in Fig. 9.

The read-only memory, or possibly a Flash memory 1102, contains instructions of the programs related to the algorithm as disclosed in Fig. 9, that are, when the device 11 is powered on, loaded to the random-access memory 1103. Alternatively, the program may also be executed directly from the ROM memory 1102.

The calculation performed by the device 11 may be implemented in software by execution of a set of instructions or program by a programmable computing machine, such as a PC (*Personal Computer*), a DSP (*Digital Signal Processor*) or a microcontroller; or else implemented in hardware by a machine or a dedicated component, such as an FPGA (*Field-Programmable Gate Array*) or an ASIC *(Application-Specific Integrated Circuit).*

In other words, the device 11 includes circuitry, or a device including circuitry, causing the device 11 to perform the program related to the algorithm as disclosed in Fig. 9.

**Claims**

1. A method for controlling a motor using a direct flux vector control module and a constant current angle locus module, **characterized in that** the method comprises the steps of:

   - determining a torque reference,
   - determining, by the constant current angle locus module, a flux reference and a current reference from the torque reference and a predetermined angle,
   - providing the flux reference and the current reference to the direct flux vector control module in order to obtain a reference voltage to be provided to the motor,
   - injecting a high frequency signal on the reference voltage,
   - determining, from motor current vector, an estimate of the direction of a flux of the motor,
   - determining, from the estimate of the direction of the flux, an estimate of the norm of the flux and an estimate of the current that flows perpendicular to the estimated direction of the flux,
   - providing the estimate of the norm of the flux and the estimate of the current that flows perpendicular to the estimated direction of the flux to the direct flux vector control module.

2. The method according to claim 1, **characterized in that** the flux reference is determined using a first function of nominal parameters of the motor times, the square root of a product of the torque divided by the tangent of the reference angle and the current reference is determined using a second function of nominal parameters of the motor times, the square root of the product torque reference multiplied by the tangent of the reference angle.

3. The method according to claim 2, **characterized in that** the first function is $f_1 = \sqrt{\dfrac{2\lambda_n}{3pI_n sin(\phi_n)}}$ , and the second function is $f_2 = \sqrt{\dfrac{2I_n sin(\phi_n)}{3p\lambda_n}}$ , where $\lambda_n$ is the nominal flux of the motor, $I_n$ is the nominal current of the motor, $sin(\phi_n)$ is determined from the nominal power factor $cos(\phi_n)$ of the motor, p is the number of pole pairs of the motor.

4. The method according to claim 1, **characterized in that** the flux reference $\lambda^*$ and the current reference $i_\tau^*$ are determined according to the following formulas:

$$\lambda^* = \sqrt{\frac{2|T^*|\lambda_n}{3pI_n tan(\gamma_\lambda^*)sin(\phi_n)}} = \sqrt{\frac{2\lambda_n}{3pI_n sin(\phi_n)}}\sqrt{\frac{|T^*|}{tan(\gamma_\lambda^*)}}$$

$$i_\tau^* = \sqrt{\frac{2|T^*|I_n sin(\phi_n)tan(\gamma_\lambda^*)}{3p\lambda_n}} = \sqrt{\frac{2I_n sin(\phi_n)}{3p\lambda_n}}\sqrt{|T^*|tan(\gamma_\lambda^*)}$$

where $\lambda_n$ is the nominal flux of the motor, $I_n$ is the nominal current of the motor, $sin(\phi_n)$ is determined from the nominal power factor $cos(\phi_n)$ of the motor, p is the number of pole pairs of the motor, $T^*$ is the torque reference and $\gamma_\lambda^*$ is the predetermined angle.

5. The method according to any of claims 1 to 4, **characterized in that** the predetermined angle is comprised between 30° to 45°.

6. The method according to any of claims 1 to 4, **characterized in that** the predetermined angle is determined as

$$\gamma_\lambda = \pi\frac{\gamma_d}{180} - atan\left(\frac{\widehat{L_q}}{\widehat{L_d}}\right)$$ , where $\widehat{L_d}$ and $\widehat{L_q}$ are nominal inductances estimated from nameplate characteristics of the motor, and $\gamma_d$ = 55°.

7. The method according to any of claims 1 to 4, **characterized in that** the predetermined angle is determined as a function of torque that is stored in a lookup table.

8. The method according to any of claims 1 to 4, **characterized in that** the predetermined angle is determined from current-to-torque-reference ratios observed at varying levels of predetermined angles and varying torque reference levels and an optimal angle is determined as the angle which minimizes the observed current-to-torque-reference ratio for the determined torque reference.

9. The method according to any of claims 1 to 8, **characterized in that** the estimated flux level is estimated as the current projected in the axis of estimated flux times a fixed ratio.

10. The method according to claim 9, **characterized in that** the fixed ratio is determined from nameplate characteristics of the motor.

11. The method according to any of claims 1 to 10, **characterized in that** the high frequency injection signal is parallel to the estimated flux vector and the angle of the flux vector is estimated to drive the high frequency response of the current vector to be parallel to the current

12. The method according to any of claims 1 to 10, **characterized in that** the high frequency injection is perpendicular to the estimated flux vector and the angle of the flux vector is estimated to drive the high frequency response of the current vector to be perpendicular to the current vector.

13. A device for controlling a motor using a direct flux vector control module and a constant current angle locus module, **characterized in that** the device comprises:

- means for determining a torque reference,
- means for determining, by the constant current angle locus module a flux reference and a current reference from the torque reference and a predetermined angle,
- means for providing the flux reference and the current reference to the direct flux vector control module in order to obtain a reference voltage to be provided to the motor,
- means for injecting a high frequency signal on the reference voltage,
- means for determining from motor current vector, an estimate of the direction of a flux of the motor,
- means for determining from the estimate of the direction of the flux, an estimate of the norm of the flux and an estimate of the current that flows perpendicular to the estimated direction of the flux,
- means for providing the estimate of the norm of the flux and the estimate of the current that flows perpendicular to the estimated direction of the flux to the direct flux vector control module.

Fig. 1

Fig. 2

$1 + z^{-1}$

$\angle$

311

312

313

$\gamma_\alpha$

$i_{\alpha\beta}$

$e^{J(\gamma_\alpha + \theta_{inj})}$

$i_{\gamma_\alpha + \theta_{inj} + \pi/2}$

$(-1)^{n+1}$

$1/i_0$

$\widehat{\omega}$

321

322

323

324

325

$1 - z^{-1}$

$\varepsilon$

$k_{p,\delta} + k_{i,\delta}/s$

$1/s$

$\widehat{\delta_\alpha}$

Fig. 3

$$\frac{\lambda_n}{I_n sin(\phi_n)}$$

$$i_{\alpha\beta} \longrightarrow \boxed{e^{J\widehat{\delta_\alpha}}} \xrightarrow{\widehat{i_{f\tau}}} \quad \xrightarrow{\widehat{i_f}} \bigotimes \longrightarrow \hat{\lambda}$$

$$\widehat{\delta_\alpha}$$

$$400 \qquad 401$$

$$\longrightarrow \widehat{i_\tau}$$

## Fig. 4

$$\lambda^* \longrightarrow \bigoplus_{+/-} \longrightarrow \boxed{k_{p,f} + k_{i,f}/s} \longrightarrow v_f^*$$

$$\hat{\lambda} \longrightarrow$$

$$500 \qquad 501$$

$$i_\tau^* \longrightarrow \bigoplus_{+/-} \longrightarrow \boxed{k_{p,\tau} + k_{i,\tau}/s} \longrightarrow v_\tau^*$$

$$\widehat{i_\tau} \longrightarrow$$

$$502 \qquad 503$$

## Fig. 5

600

601

$\omega^*$

$\widehat{\omega}$

$+/-$

$k_{p,\omega} + k_{i,\omega}/s$

$T^*$

# Fig. 6

$\beta$

$\tau$

$j$

$i_\tau$

$\theta_{inj}$

$i$

$\boldsymbol{i}$

$\boldsymbol{\lambda}$

$\theta_{inj}$

$f$

$\gamma_\lambda$

$i_f$

$\gamma_\alpha$

$\delta_\alpha$

$\alpha$

# Fig. 7

Fig. 8

Fig. 10a

Fig. 10b

S90 — Determine torque reference

S91 — Obtain predetermined angle

S92 — Determine current and flux references

S93 — Determine reference voltage

S94 — Injecting high frequency

S95 — Measuring currents

S96 — Estimating direction of the flux

S97 — Estimating flux and current perpendicular to estimated flux direction

S98 — Provide estimated flux and current to direct flux vector control

## Fig. 9

11

1100 — Processor

1103 — RAM

1102 — ROM

1101

1105

I/O I/F

## Fig. 11

Europäisches
Patentamt

European
Patent Office

Office européen
des brevets

# EUROPEAN SEARCH REPORT

Application Number

EP 22 30 6258

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | VARATHARAJAN ANANTARAM ET AL: "Direct Flux Vector Control of Synchronous Motor Drives: Accurate Decoupled Control With Online Adaptive Maximum Torque Per Ampere and Maximum Torque Per Volts Evaluation", IEEE TRANSACTIONS ON INDUSTRIAL ELECTRONICS, IEEE SERVICE CENTER, PISCATAWAY, NJ, USA, vol. 69, no. 2, 25 February 2021 (2021-02-25), pages 1235-1243, XP011886152, ISSN: 0278-0046, DOI: 10.1109/TIE.2021.3060665 [retrieved on 2021-10-28] | 1,5,7-13 | INV. H02P21/28 |
| A | * abstract * <br> * Chapter IV, Section A * <br> * figures 1, 2 * | 2-4,6 | |
| Y | BOLOGNANI S ET AL: "Sensorless control of IPM motors in the low-speed range and at stand-still by HF-injection and DFT processing", ELECTRIC MACHINES AND DRIVES CONFERENCE, 2009. IEMDC '09. IEEE INTERNATIONAL, IEEE, PISCATAWAY, NJ, USA, 3 May 2009 (2009-05-03), pages 1557-1564, XP031475979, ISBN: 978-1-4244-4251-5 <br> * abstract * <br> * Introduction * <br> * II. Sensorless Control Scheme * <br> * III. INJECTION-BASED ESTIMATION METHOD * <br> * figure 1 * | 1,5,13 | TECHNICAL FIELDS SEARCHED (IPC) <br><br> H02P |
| Y | US 2011/316458 A1 (YANAGITA YOSHIHO [JP] ET AL) 29 December 2011 (2011-12-29) <br> * paragraph [0053] * <br> * figure 2 * | 7 | |

-/--

The present search report has been drawn up for all claims

| Place of search | Date of completion of the search | Examiner |
|---|---|---|
| Munich | 3 February 2023 | Roider, Anton |

EPO FORM 1503 03.82 (P04C01)

Europäisches
Patentamt

European
Patent Office

Office européen
des brevets

## EUROPEAN SEARCH REPORT

Application Number

EP 22 30 6258

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 107 181 439 A (CRRC ZHUZHOU INST CO LTD) 19 September 2017 (2017-09-19)<br>* paragraph before S120 *<br>----- | 8 | |
| Y | EP 2 120 326 A2 (SQUARE D CO [US]) 18 November 2009 (2009-11-18)<br>* paragraphs [0080], [0081] *<br>----- | 9,10 | |
| Y | EP 3 309 954 A1 (GEN ELECTRIC [US]) 18 April 2018 (2018-04-18)<br>* paragraph [0059] *<br>* figures 5A, 7 *<br>----- | 11,12 | |

TECHNICAL FIELDS
SEARCHED (IPC)

The present search report has been drawn up for all claims

| Place of search | Date of completion of the search | Examiner |
|---|---|---|
| Munich | 3 February 2023 | Roider, Anton |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

..........................................................................

& : member of the same patent family, corresponding
    document

EPO FORM 1503 03.82 (P04C01)

21

## ANNEX TO THE EUROPEAN SEARCH REPORT
## ON EUROPEAN PATENT APPLICATION NO.

EP 22 30 6258

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2023

| Patent document cited in search report | | Publication date | Patent family member(s) | | Publication date |
|---|---|---|---|---|---|
| US 2011316458 | A1 | 29-12-2011 | CN | 102349231 A | 08-02-2012 |
| | | | JP | 5510842 B2 | 04-06-2014 |
| | | | JP | WO2010104059 A1 | 13-09-2012 |
| | | | US | 2011316458 A1 | 29-12-2011 |
| | | | WO | 2010104059 A1 | 16-09-2010 |
| CN 107181439 | A | 19-09-2017 | NONE | | |
| EP 2120326 | A2 | 18-11-2009 | EP | 2120326 A2 | 18-11-2009 |
| | | | US | 2009284211 A1 | 19-11-2009 |
| EP 3309954 | A1 | 18-04-2018 | CN | 107959446 A | 24-04-2018 |
| | | | EP | 3309954 A1 | 18-04-2018 |
| | | | JP | 2018078789 A | 17-05-2018 |
| | | | KR | 20180042136 A | 25-04-2018 |
| | | | US | 9948224 B1 | 17-04-2018 |
| | | | US | 2018109219 A1 | 19-04-2018 |

EPO FORM P0459

For more details about this annex : see Official Journal of the European Patent Office, No. 12/82